(19) Europäisches Patentamt
European Patent Office
Office européen des brevets

(11) **EP 4 253 861 A1**

(12) **EUROPEAN PATENT APPLICATION**

(43) Date of publication:
**04.10.2023  Bulletin 2023/40**

(21) Application number: **23165398.1**

(22) Date of filing: **30.03.2023**

(51) International Patent Classification (IPC):
**F24H 1/18** *(2022.01)*      **F24H 9/20** *(2022.01)*
**H02J 3/00** *(2006.01)*

(52) Cooperative Patent Classification (CPC):
**F24H 1/185; F24H 9/2021; H02J 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.03.2022  US 202263325958 P**

(71) Applicant: **Eaton Intelligent Power Limited
Dublin 4, D04 Y0C2 (IE)**

(72) Inventors:
• **CHANDRA, Souvik
Lakewood, CO 80228 (US)**

• **ZULKEFLI, Mohd, Azrin, Mohd
Eden Prairie, MN 55344 (US)**
• **NAIR, Arun, Sukumaran
Denver, CO 80235 (US)**
• **ALEXANDER, Roger
Rockville, MD 20855 (US)**
• **ROGNLI, Roger
Otsego, MN 55330 (US)**
• **CHILDS, Joseph, E.
Golden, CO 80403 (US)**

(74) Representative: **Schwan Schorer & Partner mbB
Patentanwälte
Bauerstraße 22
80796 München (DE)**

(54)  **CONTROL OF AN ELECTRIC WATER HEATER BASED ON A TWO-MASS MODEL**

(57)    Control of an electric water heater based on a two-mass model may be provided. First, a reserve capacity of an Electric Water Heater (EWH) may be determined. Next, a safe deferred time for the EWH based on the determined reserve capacity may be determined. Then a grid service event initiation may be received. In response to receiving the grid service event initiation, the EWH may be caused to not heat water for the determined safe deferred time.

**EP 4 253 861 A1**

FIG. 1

**Description**

TECHNICAL FIELD

The present disclosure relates generally to control of an electric water heater.

BACKGROUND

Demand response is a change in the power consumption of an electric utility customer to better match the demand for power with the supply. Until recently, electric energy could not be easily stored, so utilities have traditionally matched demand and supply by throttling the production rate of their power plants, taking generating units on or off line, or importing power from other utilities. There are limits to what can be achieved on the supply side, because some generating units can take a long time to come up to full power, some units may be very expensive to operate, and demand can at times be greater than the capacity of all the available power plants put together. Demand response seeks to adjust the demand for power instead of adjusting the supply.

Utilities may signal demand requests to their customers in a variety of ways, including simple off-peak metering, in which power is cheaper at certain times of the day, and smart metering, in which explicit requests or changes in price can be communicated to customers. The customer may adjust power demand by postponing some tasks that require large amounts of electric power, or may decide to pay a higher price for their electricity. Some customers may switch part of their consumption to alternate sources, such as on-site solar panels and batteries.

BRIEF DESCRIPTION OF THE FIGURES

The accompanying drawings, which are incorporated in and constitute a part of this disclosure, illustrate various embodiments of the present disclosure. In the drawings:

> FIG. 1 is a block diagram of an operating environment for providing control of an Electric Water Heater (EWH) based on a two-mass model;
> FIG. 2 is a flow chart of a method for providing control of an EWH based on a two-mass model;
> FIG. 3A illustrates power consumption of an EWH;
> FIG. 3B illustrates hourly variation of power of an EWH;
> FIG. 4 illustrates a two-mass model of an EWH;
> FIG. 5 is a block diagram of a use case for control of an EWH based on a two-mass model; and
> FIG. 6 is a block diagram of a computing device.

DETAILED DESCRIPTION

OVERVIEW

Control of an electric water heater based on a two-mass model may be provided. First, a reserve capacity of an Electric Water Heater (EWH) may be determined. Next, a safe deferred time for the EWH based on the determined reserve capacity may be determined. Then a grid service event initiation may be received. In response to receiving the grid service event initiation, the EWH may be caused to not heat water for the determined safe deferred time.

Both the foregoing overview and the following example embodiments are examples and explanatory only and should not be considered to restrict the disclosure's scope, as described, and claimed. Furthermore, features and/or variations may be provided in addition to those described. For example, embodiments of the disclosure may be directed to various feature combinations and sub-combinations described in the example embodiments.

EXAMPLE EMBODIMENTS

The following detailed description refers to the accompanying drawings. Wherever possible, the same reference numbers are used in the drawings and the following description to refer to the same or similar elements. While embodiments of the disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the disclosure. Instead, the proper scope of the disclosure is defined by the appended claims.

Embodiments of the disclosure may provide control of an Electric Water Heater (EWH) of an individual household such that the consumed power may be controlled from an edge or household level in response to a grid service event. Through intelligently delaying the turning on of the EWH, a certain reserve capacity of power may be obtained during the grid service event. This reserve capacity may add to the aggregate reserve of controllable loads in a household allowing the edge controller to take part in responding to the grid service event as requested by a central utility level control.

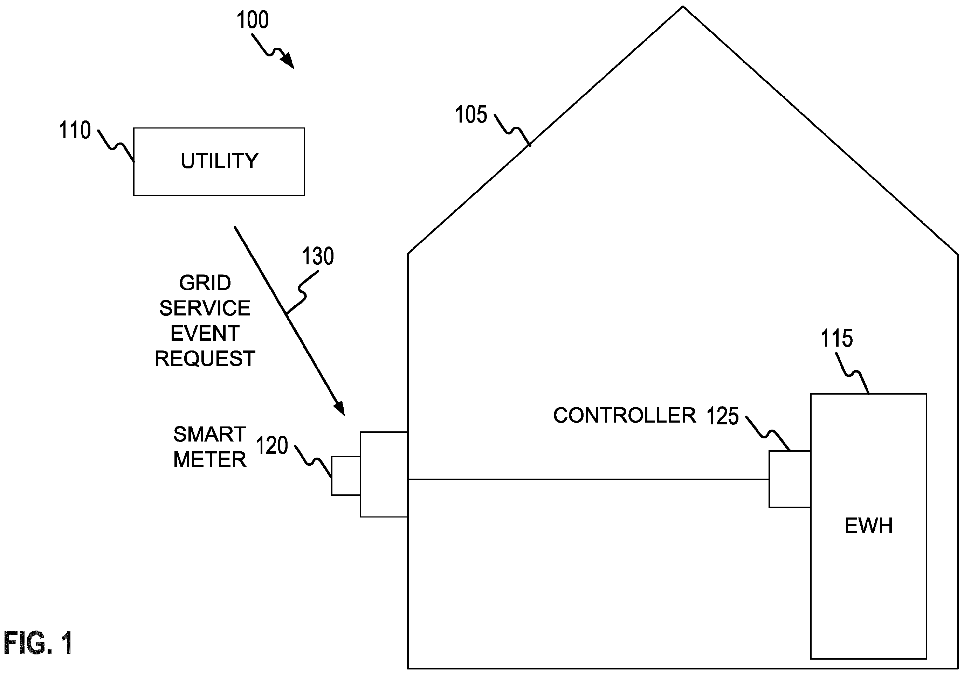

FIG. 1 shows an operating environment 100 for providing control of an electric water heater based on a two-mass model. As shown in FIG. 1, operating environment 100 may comprise of a home 105 and a utility 110. Home 105 may include an Electric Water Heater (EWH) 115 and a smart meter 120. Smart meter 120 may operate controller 125 associated with EWH 115 and may receive a grid service event request 130 from a utility 110 as described in greater detail below.

Smart meter 120 may comprise an electronic device that records information such as consumption of electric energy, voltage levels, current, power, and power factor. Smart meter 120 may communicate the information to the consumer (e.g., owner of home 105) for greater clarity of consumption behavior, and electricity suppliers (e.g., utility 110) for system monitoring and customer billing. Smart meter 120 may record energy near real-time, and report regularly, short intervals throughout the day.

In addition, smart meter 120 may enable two-way communication between smart meter 120 and a central system (e.g., utility 110). Communications between smart meter 120 and utility 110 may be wireless via mobile networks or via fixed wired connections such as Power Line Carrier (PLC). Smart meter 120, for example, may receive a grid service event request 130 from utility 110 as described in greater detail below. Grid service event request 130 may comprise a demand response from utility 110 seeking to adjust the demand for power (e.g., causing EWH 115 to not heat water) instead of adjusting the supply.

Controller 125 may monitor the power consumption of EWH 115 and report the monitored power consumption to smart meter 120. Also, controller 125, under the command of smart meter 120, may shut off the power to EWH 115 and may turn on the power to EWH 115. Shutting off the power to EWH 115 may cause EWH 115 to not heat water.

EWH 115 may be considered a potent source of energy reserve in a household as it may be designed to store a certain volume of hot water for ready usage. This reserve may be exploited by edge control (e.g., smart meter 120 and controller 125) to respond to grid service event request 130. In EWH 115, cold water may be circulated from the bottom of the tank while hot water outlet may be at the top. EWH 115 may comprise two heating elements, one located near the top and the other near the bottom. The control of each heating element may be managed by their respective thermostats in a way that the elements may heat up the water when temperature falls below a preset threshold. The lower heating element may heat up the inlet cold-water to an intermediate hot temperature, while the top one may maintain the hot water temperature at the top outlet. The top heating element may have the priority over the bottom one. The resultant behavior may be an on/off control maintaining the temperature at both the top and bottom half of the chamber within certain bounds.

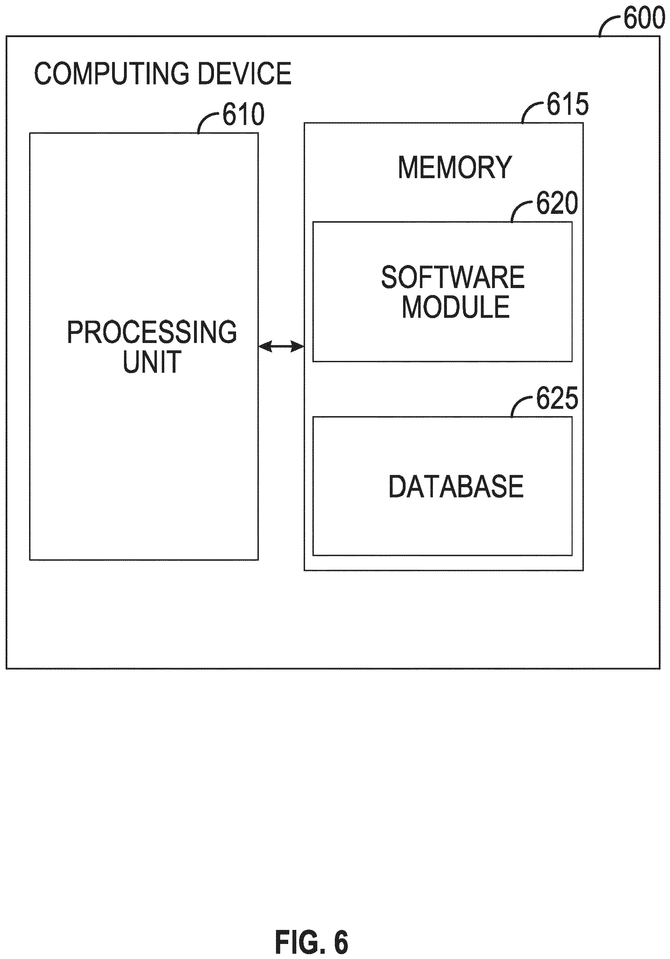

The elements described above of operating environment 100 (e.g., smart meter 120 and controller 125) may be practiced in hardware and/or in software (including firmware, resident software, micro-code, etc.) or in any other circuits or systems. The elements of operating environment 100 (e.g., smart meter 120 and controller 125) may be practiced in electrical circuits comprising discrete electronic elements, packaged or integrated electronic chips containing logic gates, a circuit utilizing a microprocessor, or on a single chip containing electronic elements or microprocessors. Furthermore, the elements of operating environment 100 (e.g., smart meter 120 and controller 125) may also be practiced using other technologies capable of performing logical operations such as, for example, AND, OR, and NOT, including but not limited to, mechanical, optical, fluidic, and quantum technologies. As described in greater detail below with respect to FIG. 6, the elements of operating environment 100 (e.g., smart meter 120 and controller 125) may be practiced in a computing device 600.

When controlling EWH 115, the following issues may be considered: i) the turning on of EWH 115 may be uncertain and may be triggered by random human behavior; ii) during hours of substantial hot water usage (e.g., when a dishwasher is running), responding to grid service event 130 may lead to customer discomfort like cold showers; iii) EWH 115, compliant with Consumer Technology Association (CTA) 2045 standard, may provide reserve capacity as a measurement, in others, no measurements may be available, installation of additional sensors to obtain temperature or low measurements may lead to tampering the manufacturer's warranty for EWH 115; and iv) controllability may only be available in the form of blocking of the heating elements. In order to tackle these issues, embodiments of the disclosure may take the following into consideration: i) EWH 115 may comprise a two-mass system, upper and lower chamber with a high and low temperature; ii) temperature of the hot water at the outlet, ground water at the inlet, ambient temperature, power rating, and tank capacity may be known or may be estimated; and iii) parameters like specific heat and density of water may be known.

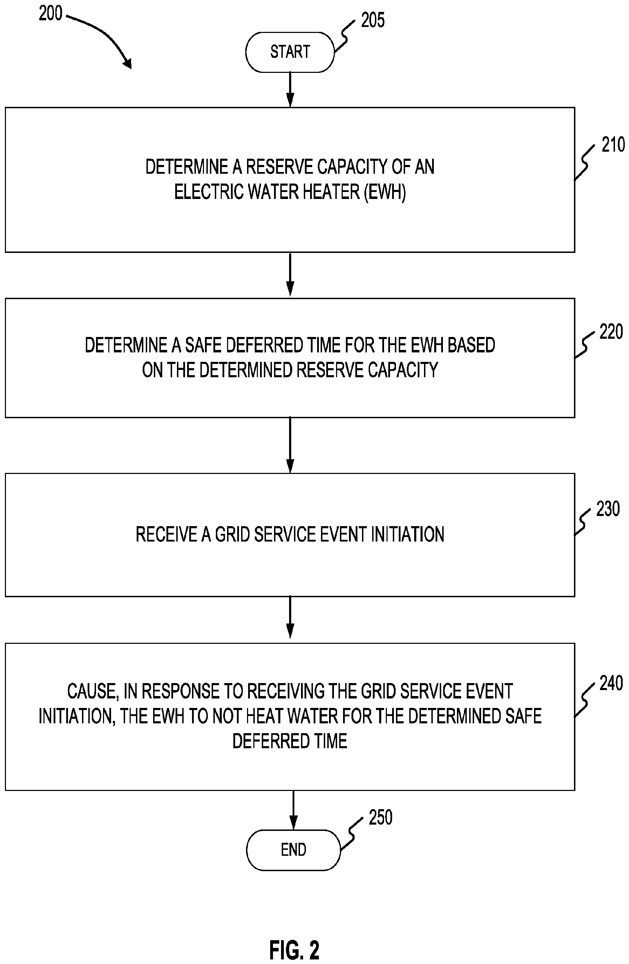

FIG. 2 is a flow chart setting forth the general stages involved in a method 200 consistent with an embodiment of the disclosure for providing control of an electric water heater based on a two-mass model. Method 200 may be implemented using smart meter 120 as described in more detail above with respect to FIG. 1. However, embodiments of the disclosure may be implemented by any computing device, for example, controller 125 or a computing device 600 as described in greater detail in FIG. 6 below. Furthermore, method 200 may be performed anywhere, for example, at home 105, at utility 110, on in the cloud. Ways to implement the stages of method 200 will be described in greater detail below.

Method 200 may begin at starting block 205 and proceed to stage 210 where smart meter 120 may determine a reserve capacity of EWH 115. For example, historic power usage of EWH 115 may be obtained by controller 125 and provided to smart meter 120.

Data Historian

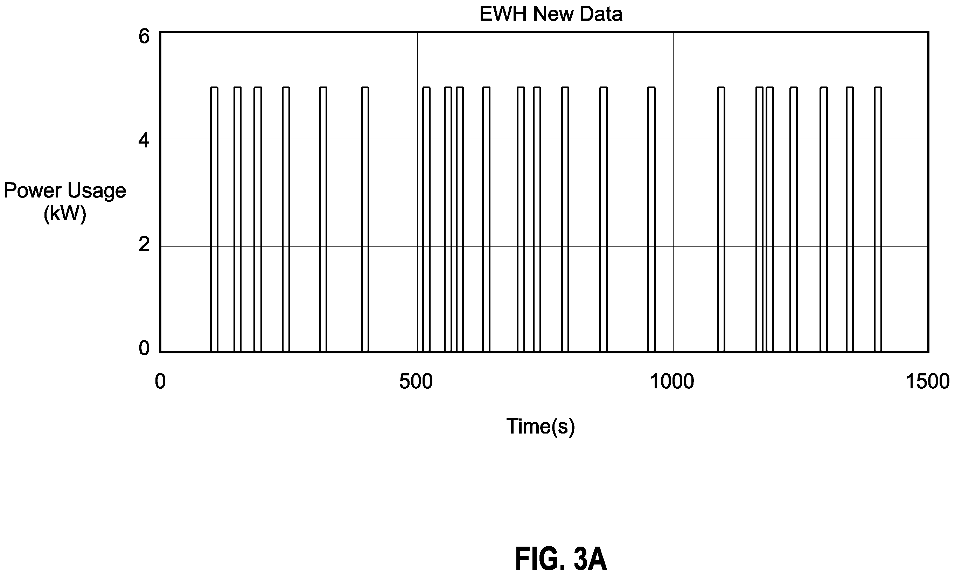

Historical one-minute power consumption data of EWH 115 from a single household may be obtained as shown in FIG. 3A for example. Controller 125 may use a historian function to store this data in a database and then retrieve it as needed. EWH 115 may either consume its rated power (e.g., 4.5 kW) or consume zero power.' From this data, the number of minutes EWH 115 is turned on in a certain period (e.g., 15 min.) may be derived, which in turn provides consumed power:

$$P_{EWH\_his}[n].$$

Stochastic Modeling

The historical power usage $P_{EWH\_his}[n]$ as determined above may be fed into a stochastic prediction model that may forecast an expected kW consumption:

$$P_{EWH\_est}[n].$$

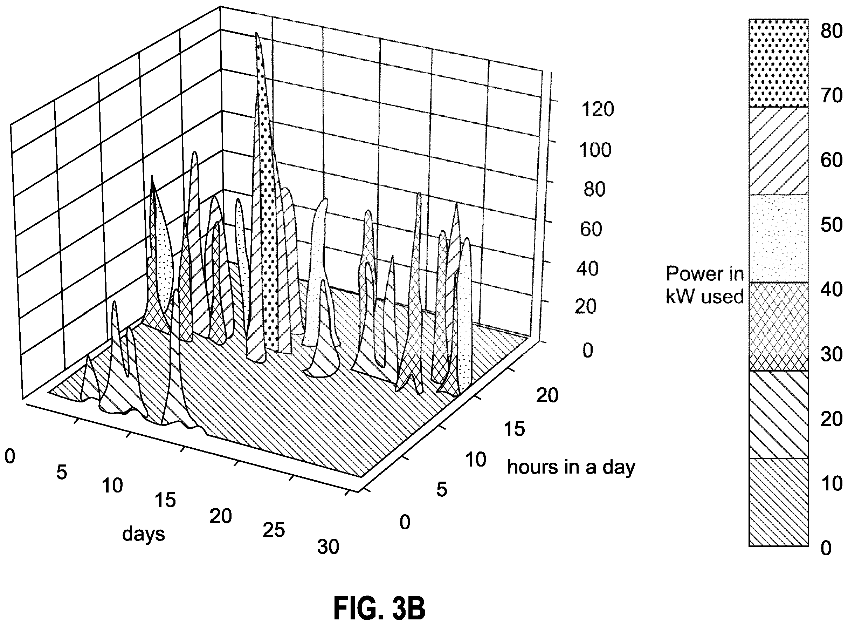

There is a correlation between daily power usage of EWH 115 with that of the hour of operation. The plot in FIG. 3B may show power in kW used by EWH 115 in all hours of the day in all days of a month from a certain household (e.g., home 105). FIG. 3B shows concentration of power consumption in a few hours in the morning for example. Based on this understanding, a Pearson correlation coefficient may be computed between the power usage in the current period n and that of the previous period $n_1$ for a certain length of days (e.g.,14 days).

$$Corr(P_{EWH}[n], P_{EWH}[n_1])$$

$$= \frac{\sum_{j=1}^{14}\left(P_{EWH,j}[n] - \bar{P}_{EWH,j}[n]\right)\left(P_{EWH,j}[n_1] - \bar{P}_{EWH,j}[n_1]\right)}{\sqrt[2]{\sum_{j=1}^{14}\left(P_{EWH,j}[n] - \bar{P}_{EWH,j}[n]\right)^2}\sqrt[2]{\sum_{j=1}^{14}\left(P_{EWH,j}[n_1] - \bar{P}_{EWH,j}[n_1]\right)^2}}$$

Based on the calculated correlation coefficient and the measured power in the previous period $n_1$, the power that will be consumed in the next period n can be predicted following the relation as shown below:

$$P_{EWH\_est}[n] = Corr(P_{EWH}[n], P_{EWH}[n_1])P_{EWH}[n_1]$$

Reserve Capacity Estimation Using A Two-Mass Model

In a certain interval, if the estimated power usage $P_{EWH\_est}[n]$ is known, that information may be used to delay the turning on of EWH 115 by a certain/fixed duration of time. This may facilitate controller 125 to minimize the aggregate power demand in the household during grid service events. But for that, a reserve capacity of hot water may need to be estimated in real time so that customer comfort bounds are not violated. The problem may thus be transformed to a determination of reserve capacity of hot water in the tank of EWH 115 with obtained power measurements.

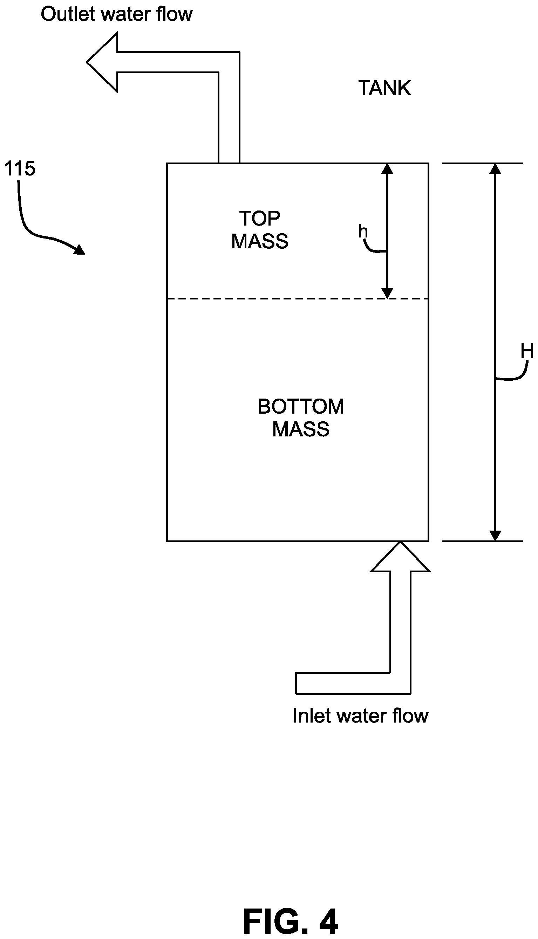

The temperature distribution in EWH 115's water tank may follow a pattern as shown FIG. 4. As observed, there may be a sharp change in water temperature along the length of the water tank. Consequently, the energy balance in the water tank may be captured approximately as a two-mass model shown in FIG. 4. In the approximate two-mass model, the top mass may have an average temperature of $T_u$ while the bottom mass may have an average temperature of $T_l$. Water may be injected into the tank through the inlet at a bottom while hot water leaves from the top at a mass flow rate of $\dot{m}$. Ambient temperature may be provided by $T_{amb}$. $UA_{WH}$ may be the heat loss coefficient of the tank, $Q_{elec}$

may be the electrical energy input, $C_p$ may be the specific heat of water, and $C_w$ may be the thermal capacitance of water. The dynamics of the height of the top hot water mass (h) may be defined by the following differential equation:

$$\frac{dh}{dt} = \frac{Q_{elec} + UA_{WH}(T_{amb} - T_l)}{C_W(T_u - T_l)} * H - \frac{\dot{m}C_p}{C_W}H - \frac{UA_{WH}}{C_W}h$$

Considering steady state operation when the amount of hot water in the tank is not changing:

$$\frac{dh}{dt} = 0 \rightarrow \frac{Q_{elec} + UA_{WH}(T_{amb} - T_l)}{C_W(T_u - T_l)} * H - \frac{\dot{m}C_p}{C_W}H = \frac{UA_{WH}}{C_W}h_{ss}$$

Now, if initial steady level of hot water:

$$h_{ss} = \alpha H$$

This leads to the following relation:

$$\frac{Q_{elec} + UA_{WH}(T_{amb} - T_l)}{(T_u - T_l)} - \dot{m}C_p = \alpha UA_{WH}$$

The above relation may be valid in case when water is used, and water is not used in steady state. Considering the scenario when hot water is not used, $\dot{m}C_p = 0$:

$$Q_{elec,nouse} = \alpha UA_{WH}(T_u - T_l) - UA_{WH}(T_{amb} - T_l)$$

On the other hand, when hot water is being used:

$$Q_{elec,use} = \alpha UA_{WH}(T_u - T_l) - UA_{WH}(T_{amb} - T_l) + \dot{m}C_p(T_u - T_l)$$

$Q_{elec,nouse}$ is basically the energy used the EWH if hot water is not used at all. It may be computed daily based on the computations of low power surges used by the EWH throughout the day. So, the unknown parameters of tank loss coefficient and mass flow rate of hot water can be estimated as,

$$UA_{WH} = \frac{Q_{elec,nouse}}{(\alpha T_u + (1 - \alpha)T_l - T_{amb})}$$

$$\dot{m}C_p = \frac{Q_{elec,use} - Q_{elec,nouse}}{(T_u - T_l)} \rightarrow m = \int \frac{Q_{elec,use} - Q_{elec,nouse}}{C_p(T_u - T_l)} dt$$

$T_{upper}$, $T_{lower}$, $T_{amb}$ may be respectively considered as 125 °F, 50°F, 70°F in approximate terms. Provided measurement of energy is known in a certain period. The new reserve capacity of hot water in real time may be estimated in the following relations:

i) If energy usage > a preset threshold (10% of rated energy in a period)

$$\alpha_{esti} = \alpha_{old} - \left(\frac{m_{esti}}{\rho * tank\_capacity}\right)$$

ii) If energy usage <a preset threshold (10% of rated energy in a period)

$$\alpha_{esti} = \alpha_{old} = preset\ bottom\ sensor\ location.$$

Safe Deferred Time Computation

From stage 210, where smart meter 120 determines the reserve capacity of EWH 115, method 200 may advance to stage 220 where smart meter 120 may determine a safe deferred time for EWH 115 based on the determined reserve capacity. For example, once the reserve capacity is estimated, the safe deferral time for turning on EWH 115 at the beginning of grid service event 130 may be computed. If a full tank (e.g., 50 gallons) of hot water needs to be heated, the energy required may be computed as below:

$$Energy = \rho * tank\_capacity * (T_u - T_l)$$

$$8.337\ gal/lb * 50\ gal * (125\text{-}50)°F = 31{,}275\ BTU = 9.16kWh$$

For EWH 115 with 4.5 kW rated power, if there is a full tank of hot water, the number of minutes the turning on of EWH 115 may be deferred by:

$$Safe\ Deferred\ Time = 9.16kWh/4.5kW = 2.04\ hours = 122\ mins$$

When $\alpha$ is the fraction of hot water estimated to be left at the end of grid service event 130:

$$Safe\ Deferred\ Time = 122 * (\alpha - \alpha_{safe})\ mins$$

Where $\alpha_{safe}$ is the minimum allowable hot water level at the end of grid service event.

Also, in some embodiments, if $\alpha < \alpha_{safe}$, EWH 115 may not participate in grid service event 130, safe deferred time = 0 mins. This may guarantee a minimum reserve capacity of $\alpha_{safe}$ at the end of each grid service event, preventing customer discomfort or cold showers. $\alpha_{safe}$ is typically assigned as 10%-25% of hot water tank capacity, depending on the need of the homeowners.

Once smart meter 120 determines the safe deferred time for EWH 115 based on the determined reserve capacity in stage 220, method 200 may continue to stage 230 where smart meter 120 may receive grid service event 130 initiation. For example, grid service event 130 may comprise a demand response from utility 110 seeking to adjust the demand for power (e.g., causing EWH 115 to not heat water) instead of adjusting the supply.

After smart meter 120 receives grid service event initiation 130 in stage 230, method 200 may proceed to stage 240 where smart meter 120 may cause, in response to receiving grid service event 130 initiation, EWH 115 to not heat water for the determined safe deferred time. For example, controller 125 under the command of smart meter 120, may shut off the power to EWH 115 for the duration of the safe deferred time. At the end of the safe deferred time, controller 125 under the command of smart meter 120, may turn on the power to EWH 115. Once smart meter 120 causes, in response to receiving grid service event initiation 130, EWH 115 to not heat water for the determined safe deferred time in stage 240, method 200 may then end at stage 250.

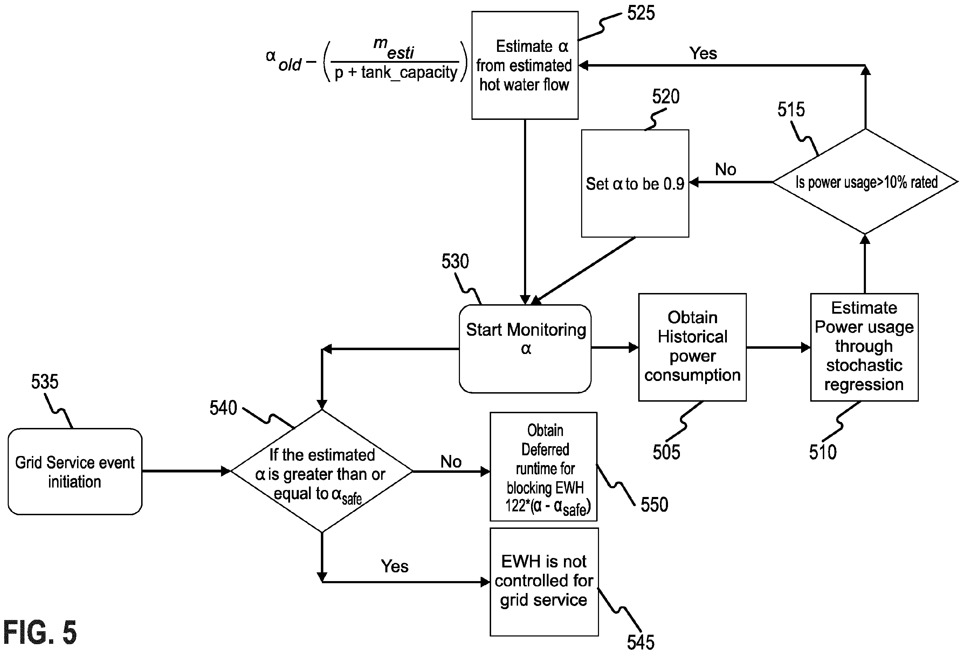

FIG. 5 is a block diagram of a use case for control of an electric water heater based on a two-mass model. The process shown in FIG. 5 is an example used case and other use cases may be realized consistent with embodiments of the disclosure. Consistent with embodiments of the disclosure, based on the reserve capacity estimated at the beginning of grid service event 130, smart meter may determine a safe deferred time for blocking the turning on of EWH 115. As shown in FIG. 5, historical power consumption may be obtained (stage 505) as described above and an estimated power usage may be determined (stage 510) as described above. Then it is determined if the power usage is greater than 10% rated (stage 515). If the power usage is not greater than 10% rated, $\alpha$ may be set to 0.9 or 90% of the capacity of the EWH tank (stage 520). If the power usage is greater than 10% rated, $\alpha$ may be estimated from hot water flow (stage 525). In this way, $\alpha$ may be monitored (stage 530) on an ongoing basis. Then, when grid service event 130 is received (stage 535) the monitored estimated $\alpha$ may be evaluated (stage 540). If the estimated $\alpha$ is less than $\alpha_{safe}$, EWH 115 may not be controlled in response to the received grid service event 130 (stage 545). However, if the estimated $\alpha$ is greater than or equal to $\alpha_{safe}$, the safe deferred time is obtained and the EWH 115 may be blocked from running for safe deferred time == $122 * (\alpha - \alpha_{safe})$ mins (stage 550).

FIG. 6 shows computing device 600. As shown in FIG. 6, computing device 600 may include a processing unit 610 and a memory unit 615. Memory unit 615 may include a software module 620 and a database 625. While executing on processing unit 610, software module 620 may perform, for example, processes for providing control of an EWH based on a two-mass model as described above with respect to FIG. 2. Computing device 600, for example, may provide an operating environment for smart meter 120 and/or controller 125. Smart meter 120 and controller 125 may operate in other environments and are not limited to computing device 600.

Computing device 600 may be implemented using a smart meter, a Wi-Fi access point, a tablet device, a mobile device, a smart phone, a telephone, a remote control device, a set-top box, a digital video recorder, a cable modem, a personal computer, a network computer, a mainframe, a router, a switch, a server cluster, a smart TV-like device, a network storage device, a network relay device, or other similar microcomputer-based device. Computing device 600 may comprise any computer operating environment, such as hand-held devices, multiprocessor systems, microprocessor-based or programmable sender electronic devices, minicomputers, mainframe computers, and the like. Computing device 600 may also be practiced in distributed computing environments where tasks are performed by remote processing devices. The aforementioned systems and devices are examples, and computing device 600 may comprise other systems or devices.

Embodiments of the disclosure, for example, may be implemented as a computer process (method), a computing system, or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

While certain embodiments of the disclosure have been described, other embodiments may exist. Furthermore, although embodiments of the present disclosure have been described as being associated with data stored in memory and other storage mediums, data can also be stored on, or read from other types of computer-readable media, such as secondary storage devices, like hard disks, floppy disks, or a CD-ROM, a carrier wave from the Internet, or other forms of RAM or ROM. Further, the disclosed methods' stages may be modified in any manner, including by reordering stages and/or inserting or deleting stages, without departing from the disclosure.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. Embodiments of the disclosure may also be practiced using other technologies capable of performing logical operations such as, for example, AND, OR, and NOT, including but not limited to, mechanical, optical, fluidic, and quantum technologies. In addition, embodiments of the disclosure may be practiced within a general purpose computer or in any other circuits or systems.

Embodiments of the disclosure may be practiced via a system-on-a-chip (SOC) where each or many of the element illustrated in FIG. 1 may be integrated onto a single integrated circuit. Such an SOC device may include one or more processing units, graphics units, communications units, system virtualization units and various application functionality all of which may be integrated (or "burned") onto the chip substrate as a single integrated circuit. When operating via an SOC, the functionality described herein with respect to embodiments of the disclosure, may be performed via application-specific logic integrated with other components of computing device 600 on the single integrated circuit (chip).

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While the specification includes examples, the disclosure's scope is indicated by the following claims. Furthermore, while the specification has been described in language specific to structural features and/or methodological acts, the claims are not limited to the features or acts described above. Rather, the specific features and acts described above are disclosed as example for embodiments of the disclosure.

Examples of the disclosure may be described according to the following aspects.

Aspect 1. A method comprising: determining a reserve capacity of an Electric Water Heater (EWH); determining a safe deferred time for the EWH based on the determined reserve capacity; receiving a grid service event initiation; and causing, in response to receiving the grid service event initiation, the EWH to not heat water for the determined safe deferred time.

Aspect 2. The method of aspect 1, wherein determining the reserve capacity of the EWH comprises determining the reserve capacity of the EWH based on estimated power usage of the EWH.

Aspect 3. The method of aspect 2, wherein determining the reserve capacity of the EWH based on estimated power usage of the EWH comprises: obtaining historic power usage of the EWH; and feeding the obtained historic power usage of the EWH into a stochastic prediction model.

Aspect 4. The method of aspect 1, wherein determining the reserve capacity of the EWH comprises determining the reserve capacity of the EWH based on a two-mass model of the EWH.

Aspect 5. The method of aspect 4, wherein a first mass of the two-mass model is associated with water in an upper portion of the EWH and a second mass of the two-mass model is associated with water in a lower portion of the EWH.

Aspect 6. The method of aspect 1, wherein causing the EWH to not heat water for the determined safe deferred time comprises causing the EWH to not heat water for the determined safe deferred time when a hot water capacity estimated to be left at an end of the safe deferred time is greater than a predetermined threshold.

Aspect 7. The method of aspect 6, wherein the predetermined threshold is between 10% and 25% as defined by a user.

Aspect 8. The method of aspect 1, wherein the method is performed by a computing device at a home where the EWH is disposed.

Aspect 9. The method of aspect 8, wherein the computing device is a smart meter.

Aspect 10. A system comprising: a memory storage; and a processing unit coupled to the memory storage, wherein the processing unit is operative to: determine a reserve capacity of an Electric Water Heater (EWH); determine a safe deferred time for the EWH based on the determined reserve capacity; receive a grid service event initiation; and cause, in response to receiving the grid service event initiation, the EWH to not heat water for the determined safe deferred time.

Aspect 11. The system of aspect 10, wherein the processing unit being operative to determine the reserve capacity of the EWH comprises the processing unit being operative to determine the reserve capacity of the EWH based on estimated power usage of the EWH.

Aspect 12. The system of aspect 11, wherein the processing unit being operative to determine the reserve capacity of the EWH based on estimated power usage of the EWH comprises: obtain historic power usage of the EWH; and feed the obtained historic power usage of the EWH into a stochastic prediction model.

Aspect 13. The system of aspect 10, wherein the processing unit being operative to determine the reserve capacity of the EWH comprises the processing unit being operative to determine the reserve capacity of the EWH based on a two-mass model of the EWH.

Aspect 14. The system of aspect 13, wherein a first mass of the two-mass model is associated with water in an upper portion of the EWH and a second mass of the two-mass model is associated with water in a lower portion of the EWH.

Aspect 15. The system of aspect 10, wherein the processing unit being operative to cause the EWH to not heat water for the determined safe deferred time comprises the processing unit being operative to cause the EWH to not heat water for the determined safe deferred time when a hot water capacity estimated to be left at an end of the safe deferred time is greater than a predetermined threshold.

Aspect 16. A computer-readable medium that stores a set of instructions which when executed perform a method executed by the set of instructions comprising: determining a reserve capacity of an Electric Water Heater (EWH); determining a safe deferred time for the EWH based on the determined reserve capacity; receiving a grid service event initiation; and causing, in response to receiving the grid service event initiation, the EWH to not heat water for the determined safe deferred time.

Aspect 17. The computer-readable medium of aspect 16, wherein determining the reserve capacity of the EWH comprises determining the reserve capacity of the EWH based on estimated power usage of the EWH.

Aspect 18. The computer-readable medium of aspect 17, wherein determining the reserve capacity of the EWH based on estimated power usage of the EWH comprises: obtaining historic power usage of the EWH; and feeding the obtained historic power usage of the EWH into a stochastic prediction model.

Aspect 19. The computer-readable medium of aspect 16, wherein determining the reserve capacity of the EWH comprises determining the reserve capacity of the EWH based on a two-mass model of the EWH.

Aspect 20. The computer-readable medium of aspect 19, wherein a first mass of the two-mass model is associated with water in an upper portion of the EWH and a second mass of the two-mass model is associated with water in a lower portion of the EWH.

**Claims**

1. A method comprising:

   determining a reserve capacity of an Electric Water Heater (EWH);
   determining a safe deferred time for the EWH based on the determined reserve capacity;
   receiving a grid service event initiation; and
   causing, in response to receiving the grid service event initiation, the EWH to not heat water for the determined safe deferred time.

2. The method of claim 1, wherein determining the reserve capacity of the EWH comprises determining the reserve capacity of the EWH based on estimated power usage of the EWH.

3. The method of claim 2, wherein determining the reserve capacity of the EWH based on estimated power usage of the EWH comprises:

   obtaining historic power usage of the EWH; and
   feeding the obtained historic power usage of the EWH into a stochastic prediction model.

4. The method of claim 1, wherein determining the reserve capacity of the EWH comprises determining the reserve capacity of the EWH based on a two-mass model of the EWH.

5. The method of claim 4, wherein a first mass of the two-mass model is associated with water in an upper portion of the EWH and a second mass of the two-mass model is associated with water in a lower portion of the EWH.

6. The method of claim 1, wherein causing the EWH to not heat water for the determined safe deferred time comprises causing the EWH to not heat water for the determined safe deferred time when a hot water capacity estimated to be left at an end of the safe deferred time is greater than a predetermined threshold.

7. The method of claim 6, wherein the predetermined threshold is between 10% and 25% as defined by a user.

8. The method of claim 1, wherein the method is performed by a computing device at a home where the EWH is disposed.

9. The method of claim 8, wherein the computing device is a smart meter.

10. A system comprising:

    a memory storage; and
    a processing unit coupled to the memory storage, wherein the processing unit is operative to:

       determine a reserve capacity of an Electric Water Heater (EWH);
       determine a safe deferred time for the EWH based on the determined reserve capacity;
       receive a grid service event initiation; and
       cause, in response to receiving the grid service event initiation, the EWH to not heat water for the determined safe deferred time.

11. The system of claim 10, wherein the processing unit being operative to determine the reserve capacity of the EWH comprises the processing unit being operative to determine the reserve capacity of the EWH based on estimated power usage of the EWH.

12. The system of claim 11, wherein the processing unit being operative to determine the reserve capacity of the EWH based on estimated power usage of the EWH comprises the processing unit being operative to:

obtain historic power usage of the EWH; and
feed the obtained historic power usage of the EWH into a stochastic prediction model.

13. The system of claim 10, wherein the processing unit being operative to determine the reserve capacity of the EWH comprises the processing unit being operative to determine the reserve capacity of the EWH based on a two-mass model of the EWH.

14. The system of claim 13, wherein a first mass of the two-mass model is associated with water in an upper portion of the EWH and a second mass of the two-mass model is associated with water in a lower portion of the EWH.

15. The system of claim 10, wherein the processing unit being operative to cause the EWH to not heat water for the determined safe deferred time comprises the processing unit being operative to cause the EWH to not heat water for the determined safe deferred time when a hot water capacity estimated to be left at an end of the safe deferred time is greater than a predetermined threshold.

FIG. 1

FIG. 2

FIG. 3A

**FIG. 3B**

Outlet water flow

TANK

115

TOP
MASS

h

BOTTOM
MASS

H

Inlet water flow

**FIG. 4**

EP 4 253 861 A1

$$\alpha_{old} - \left( \frac{m_{esti}}{p + tank\_capacity} \right)$$

Estimate $\alpha$ from estimated hot water flow — 525

Yes

520

Is power usage>10% rated — 515

No

Set $\alpha$ to be 0.9

530

Start Monitoring $\alpha$

Obtain Historical power consumption — 505

Estimate Power usage through stochastic regression — 510

535

Grid Service event initiation

540

If the estimated $\alpha$ is greater than or equal to $\alpha_{safe}$

No

Obtain Deferred runtime for blocking EWH $122*(\alpha - \alpha_{safe})$ — 550

Yes

EWH is not controlled for grid service — 545

**FIG. 5**

**FIG. 6**

EP 4 253 861 A1

# EUROPEAN SEARCH REPORT

**Application Number**

EP 23 16 5398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/193221 A1 (BUESCHER THOMAS P [US] ET AL) 1 August 2013 (2013-08-01) * paragraphs [0039] – [0067], [0085] – [0088], [0101] – paragraph [0113] * ----- | 1-15 | INV. F24H1/18 F24H9/20 H02J3/00 |
| A | GB 2 578 300 A (SWANBARTON LTD [GB]) 6 May 2020 (2020-05-06) * the whole document * ----- | 1-15 | |
| A | US 2019/277537 A1 (MCCULLOUGH JASON J [US] ET AL) 12 September 2019 (2019-09-12) * the whole document * ----- | 1-15 | |
| A | WO 2021/001060 A1 (EATON INTELLIGENT POWER LTD [IE]) 7 January 2021 (2021-01-07) * the whole document * ----- | 1-15 | |
| | | | **TECHNICAL FIELDS SEARCHED (IPC)** F24H H02J |

The present search report has been drawn up for all claims

| Place of search | Date of completion of the search | Examiner |
|---|---|---|
| Munich | 24 July 2023 | Riesen, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 5398

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2023

| Patent document cited in search report | Publication date | Patent family member(s) | Publication date |
|---|---|---|---|
| US 2013193221 A1 | 01-08-2013 | US 2013193221 A1<br>US 2016169556 A1 | 01-08-2013<br>16-06-2016 |
| GB 2578300 A | 06-05-2020 | NONE | |
| US 2019277537 A1 | 12-09-2019 | NONE | |
| WO 2021001060 A1 | 07-01-2021 | CA 3144802 A1<br>EP 3994780 A1<br>US 2022352717 A1<br>WO 2021001060 A1 | 07-01-2021<br>11-05-2022<br>03-11-2022<br>07-01-2021 |

EPO FORM P0459

For more details about this annex : see Official Journal of the European Patent Office, No. 12/82